# EUROPEAN PATENT APPLICATION

(11) **EP 3 369 351 A2**
(43) Date of publication of application: **05.09.2018**
(21) Application number: 18159308.8
(22) Date of filing: 28.02.2018
(51) Int. Cl.: A47J 27/21

(54) **BEVERAGE MAKING APPLIANCE**

(30) Priority: 01.03.2017 GB 201703328
(71) Applicant: Kenwood Limited, Havant, Hampshire PO9 2NH (GB)
(72) Inventor: PALMER, Paul, Havant, Hampshire PO9 2NH (GB); SEALY, James Joseph, Havant, Hampshire PO9 2NH (GB); MORGAN, Shaun, Havant, Hampshire PO9 2NH (GB); WELCH, Mark, Havant, Hampshire PO9 2NH (GB)
(74) Representative: Hector, Annabel Mary

(57) **Abstract**

An appliance for heating a liquid in order to make a beverage comprises a liquid receptacle having a first compartment with an inlet for receiving liquid to be heated, and a second compartment in fluid communication with the first compartment so as to receive liquid from the first compartment. The second compartment has an outlet for dispensing heated liquid and at least one heater operable to heat liquid contained in the second compartment.

## Description

The present invention relates to an appliance for making beverages, and in particular an appliance for heating a liquid, preferably a liquid for consumption such as water.

Typically, an appliance may be used to prepare hot or cold beverages by either heating or cooling water (or other consumable liquids). Examples of such an appliance (or "beverage-maker") include coffee machines, tea-makers, kettles, blenders, juicers, and other suitable devices for preparing and processing liquid for human consumption. These appliances are often used in a kitchen environment.

At present, many beverage-making appliances, particularly kettles, are not particularly energy-efficient . This is not helped by users over-filing the beverage-maker and thereby preparing more beverage than is required, and leaving the beverage unconsumed. This results in beverage that is prepared but not consumed in timely fashion, and which often must be either kept at a desired temperature until it is consumed, or returned to the desired temperature prior to consumption.

The energy efficiency of beverage-makers, particularly kettles, has been further impaired by a movement away from relatively energy-efficient arrangements in which heating or cooling elements are immersed into the liquid, to flat-plate-shaped elements located below or along the bottom of the vessel in which the liquid is heated or cooled. These flat-plate-shaped elements are advantageous in that they aesthetically appealing to consumers, easier to clean and de-scale, less easily damaged by objects entering into the vessel, and are more simple to manufacture. However, with flat-plate-shaped elements, heat is wasted by the element not being entirely immersed into the liquid with energy being lost to the surroundings. Furthermore, the planar shape does not maximise the contact-area with the vessel, which results in the loss of energy through noise being produced by bubble-creation on the element resulting from e.g., boiling, as the flat plate acts as a sound-board, amplifying the noise.

Additionally, particularly when in a hurry in the morning, consumers often wish to consume only one serving of a particular beverage. However, the beverage-makers of the prior art prepares this single-serving in a similar fashion to the way it might prepare a much larger quantity, and in a larger container which results in more potentially being prepared (e.g. boiled) than necessary, thus resulting in an excessive amount of time being taken to prepare the single-serving. Furthermore, any beverage-preparation process is limited by the maximum energy safely deliverable by an external power supply such as a household electrical supply to an appliance (typically 2-3kW depending on country).

It is an aim of the present invention to provide a beverage-maker which at least alleviates some of the issues outlined above.

Described herein is an appliance for heating a liquid, comprising: a liquid receptacle having a first compartment with an inlet for receiving liquid to be heated, and a second compartment in fluid communication with the first compartment so as to receive liquid from the first compartment, the second compartment having an outlet for dispensing heated liquid; and at least one heater operable to heat liquid contained in the second compartment.

Thus the appliance may be used to apply heat only to the liquid, such as water, in the second compartment, even when the receptacle contains more liquid.

There may be a valve arranged to control the flow of liquid between the first and second compartments. The second compartment may be smaller than the first chamber, and may have a volume of less than 500 ml; optionally less than 400ml; optionally less than 300 ml. Thus the appliance can be used to heat a required volume of liquid such as one or two cupfuls.

The second compartment may be arranged to contain a fixed volume of fluid from the first chamber, and is preferably arranged to fill with liquid when liquid is added to the receptacle, for example by being arranged below the first chamber.

The appliance may include an outlet valve arranged to control the flow of fluid out of the second compartment. The outlet may comprises an outlet channel having a dispensing spout, and the channel may for example be arranged to extend adjacent the first chamber, with the dispensing spout arranged at an upper portion of the receptacle (e.g. in the manner of a jug-type kettle). The spout may also have a dispensing valve, which may include a fastener arranged on the outside of the receptacle which is operable to close the dispensing valve from the outside.

The receptacle may have a removable cover or lid, arranged to close the inlet or open top of the first compartment; and optionally arranged to provide a fluid tight seal in case the receptacle is tilted.

In one example, the first compartment may comprise insulation so as to inhibit cooling of a heated liquid contained therein.

The receptacle may have a heat plate arranged to heat the fluid in the second chamber. The heat plate, or a further heat plate, may be arranged between the first and second compartments so as to provide heat to fluid contained in at least one of the first and second chambers. Alternatively or in addition, there may be an immersion heater arranged to be immersed in the fluid whereby to heat the fluid. The receptacle may also have a heat sink disposed within the second chamber for assisting in heat transfer from the heat plate.

Where the receptacle includes at least two heaters, the heaters may be individually controllable. The appliance may comprise a controller arranged to control the provision of electrical power to the at least one heater and/or to control the operation of the inlet and outlet valves.

The appliance may comprise at least one sensor arranged to detect at least one physical parameter of a fluid contained in at least one of the first and second compartments, such as fluid weight, volume and/or temperature. The controller may be arranged to operate in response to an output of the sensor.

In one embodiment, the receptacle has an impeller arranged to impel flow in fluid contained within the second chamber, optionally wherein a motor arrangement for driving the impeller is arranged within the receptacle. Alternatively or in addition, there may be a moveable stirring member arranged in the second compartment, which may operate by upward motion of liquid which has been heated in the compartment, and thus tends to rise.

The appliance may comprise a base unit to which the fluid receptacle is removably mountable via a connection mechanism, the base unit having a connection to an external power supply, for example a mains (AC) power supply, and the connection mechanism being arranged to transmit power to the receptacle, and optionally to allow 360 degree attachment, and/or data-transfer.

The appliance may comprise a processor and/or a memory and/or data-transfer means in at least one of the controller or base unit, optionally connected to a PCB, optionally which has an integral processor.

In one example, the base unit includes a power storage device having at least one capacitor for storing electrical power, and arranged to selectively supply power to the at least one heater.

Thus in another aspect the invention provides an appliance for heating fluid, comprising a base unit arranged to receive a fluid receptacle having at least one heater for heating fluid contained therein, the base unit comprising a power storage device for storing electrical power and arranged to selectively supply electrical power to at least one heater of the fluid receptacle.

The power storage device may include a rechargeable battery, and may further comprise power-conversion componentry configured to perform at least one of: AC/DC conversion; DC/AC conversion so as to transform electrical power for charging and/or discharging the battery.

The base may be arranged to supply power to at least one heater of the fluid receptacle from an external power source, optionally a mains power supply. It may comprise a synchroniser associated with the power storage device, and arranged to synchronise a DC output of the power storage device with AC power, provided externally to the receptacle so as selectively to augment the AC power with DC power stored in the power storage device.

When the receptacle comprises at least two heaters, one may be arranged to be powered by DC power from the power storage device, and the other may be arranged to be powered by external AC power.

The base may be configured to mount a plurality of different receptacles, and comprises a sensor arranged to provide an indication of a property of a receptacle mounted thereto. For example the receptacles may have different volumes, and the property may be the volume of the receptacle or may be a property relating to a heater in the receptacle. In one example, the base is arranged to supply power from the power connection and/or from the power storage device in dependence upon the property of the receptacle mounted thereto.

The base preferably comprises a seal for sealing the connection arrangement when a receptacle is not mounted on the base. This is particularly useful with a small receptacle.

Thus the invention also provides a base unit for heating fluid in a receptacle, the unit having a mount for a receptacle and comprising a sensor arranged to provide an indication of a property of a receptacle mounted thereto, a power supply arrangement for providing power for heating fluid in the receptacle, and a processor configured to control the power supply arrangement depending upon the indication received from the sensor, for example to vary the power supplied.

The base unit may form part of an appliance including a plurality of receptacles, for example of different volumes, configured to be mountable on the base for heating fluid in the receptacles. Such receptacles may have a double walled construction for insulting against heat loss from the fluid therein.

The invention also comprises a method of heating a liquid, comprising: storing a liquid in a first compartment of a fluid receptacle; transferring a portion of the liquid from the first compartment to a second compartment of the fluid receptacle; and heating the portion of fluid contained in the second compartment; wherein the second compartment has a closable fluid connection with the first compartment so as to receive liquid from the first compartment.

The invention extends to methods and/or apparatus substantially as herein described and/or as illustrated with reference to the accompanying drawings.

The invention extends to any novel aspects or features described and/or illustrated herein.

Any apparatus feature as described herein may also be provided as a method feature, and vice versa. As used herein, means plus function features may be expressed alternatively in terms of their corresponding structure, such as a suitably programmed processor and associated memory.

Any feature in one aspect of the invention may be applied to other aspects of the invention, in any appropriate combination. In particular, method aspects may be applied to apparatus aspects, and vice versa. Furthermore, any, some and/or all features in one aspect can be applied to any, some and/or all features in any other aspect, in any appropriate combination.

It should also be appreciated that particular combinations of the various features described and defined in any aspects of the invention can be implemented and/or supplied and/or used independently.

In this specification the word 'or' can be interpreted in the exclusive or inclusive sense unless stated otherwise.

Furthermore, features implemented in hardware may generally be implemented in software, and vice versa. Any reference to software and hardware features herein should be construed accordingly.

Whilst the invention has been described in the field of domestic food processing and preparation machines, it can also be implemented in any field of use, where efficient, effective and convenient preparation and/or processing of material is desired, either on an industrial scale and/or in small amounts. The field of use includes the preparation and/or processing of: chemicals; pharmaceuticals; paints; building materials; clothing materials; agricultural and/or veterinary feeds and/or treatments, including fertilisers, grain and other agricultural and/or veterinary products; oils; fuels; dyes; cosmetics; plastics; tars; finishes; waxes; varnishes; beverages; medical and/or biological research materials; solders; alloys; effluent; and/or other substances , and any reference to "food" herein may be replaced by such working mediums. It will be appreciated that the processing of food may include the processing and/or blending of liquid items, and may also include the processing of solid food or ice items into a liquid form.

The invention described here may be used in any kitchen appliance and/or as a stand-alone device. This includes any domestic food-processing and/or preparation machine, including both top-driven machines (e.g. stand-mixers) and bottom-driven machines (e.g. blenders). It may be implemented in heated and/or cooled machines. It may be used in a machine that is built-in to a work-top or work surface, or in a stand-alone device. The invention can also be provided as a stand-alone device, whether motor-driven or manually powered.

These and other aspects of the present invention will become apparent from the following exemplary embodiments of the invention that are described with reference to the accompanying drawings, in which:
Fig. 1 shows a schematic diagram of a beverage-maker according to an embodiment of the invention;
Fig. 2 shows a partly cut-away perspective view of a heating element according to another embodiment of the invention; and,
Fig. 3 shows a perspective view of circulation pump arrangement according to another embodiment of the present invention.

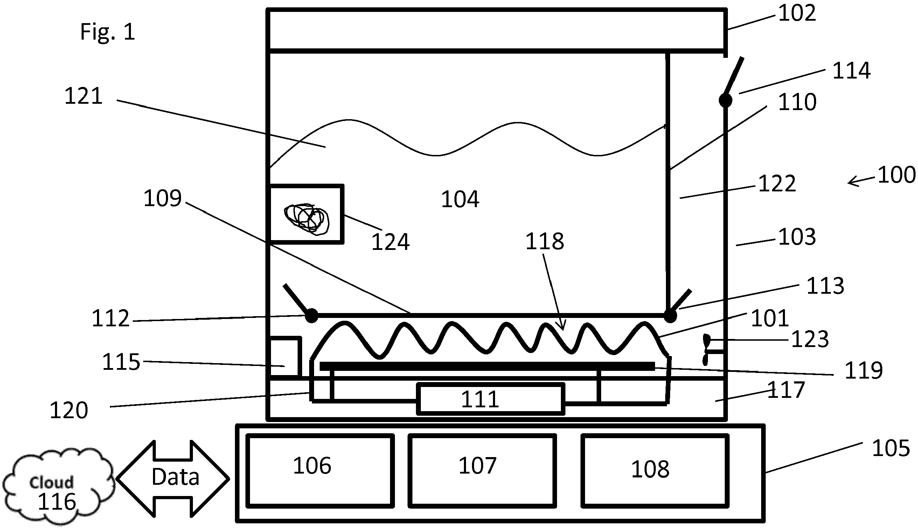

Figure 1 shows an exemplary beverage-maker 100 for heating water or another consumable liquid 104, having a receptacle 103 for receiving the liquid 104 with an upper opening that is covered by a removably attachable cover 102. The cover 102 is preferably sealed so as to prevent egress of heated water around it even when the receptacle 103 is upside-down, and may be screwingly or hingedly attached to receptacle 103. The beverage receptacle 103 is removably attachable to a base unit 105 via, for example, a connection mechanism such as allows 360 degree attachment, electrical power transmission, and data-transfer.

The beverage receptacle 103 has an upper liquid or beverage holding compartment 121, and a lower compartment 117 sealed from the upper compartment and containing a power-control system 111 which controls power delivered to a immersion heating element 101 and a flat heating element 119 via wires 120. The power control system 111 in turn receives electrical power from the base unit 105 which is in turn connected to an external power supply such as an alternating current (AC) mains power supply. Whilst two heating elements are shown here, either one of the two may be used alone instead, or more than two may be used. The power control system can include a processor, a memory, and data-transmission means suitable for it to carry out its tasks described herein.

The receptacle 103 has an inner divider board 109 that co-operatively defines a heating space 118 with the inner surface of the upper compartment 121, in which space 118 the heating elements 101 and 119 are located. The volume of the heating space 118 usable for heating water is preferably equal to a limited (e.g., single) serving of a liquid or beverage to be heated (e.g., 200ml for water for making tea). The heating space 118 has an inlet provided with an inflow valve 112, and an outlet provided with an outflow valve 113.

The divider board 109 and the side walls and bottom of beverage holding compartment 121 preferably are sound/heat insulating in construction. For example, they may define air-filled, foam-filed, or vacuum-filled cavities within them that impede the loss of heat and the transmission of sound through them. This reduces noise generated by the heating elements 101 and 119 from escaping from the beverage heating space 118.

Alternatively the inner board 109 may be replaced by an additional heating element (also receiving power from power control system 111 via wires 120) so that both the beverage 104 above the beverage heating space 118 and within it is heated. For example, the heating element that replaces the inner board 109 may merely warm the beverage in the beverage holding compartment 121 so as to allow faster boiling of it once within the beverage heating space 118, but not boiling it so as to generate noise.

The receptacle 103 may also include an inner upright 110 that co-operatively defines (with the inner side-wall of beverage receptacle 103) an outflow channel 122 fluidly connected at a lower end to the beverage heating space 118 via the outflow valve 113, and at an upper end to an opening via an exit valve 114 which permits flow of heated liquid or beverage 104 out of the receptacle 103. This prevents the heated beverage from the heating compartment 118 mixing with the cooler beverage 104 held in beverage holding compartment 121 when exiting the receptacle 103. The exit valve 114 may alternatively be omitted, with the release of heated liquid from the heating compartment 118 being controlled by the outflow valve 113.

The exit valve 114 is preferably externally lockable by the user to prevent unwanted outflow of hot water through it when separated from the base 105. This may be achieved using ties, latches (e.g., over-centre latches) and other locking/latching elements.

The immersion heating element 101 is preferably of a shape that maximises contact-area, such as, for example, wave-shaped, or multiple relatively thin fins. Alternatively it may be replaced by a heat-sink that directly conducts heat from the flat plate heating element 119 into the beverage to maximise heat-transfer. Indeed, theinner board 109 and theinner upright 110 may be omitted, with the height of heating element 101 being such that a desired quantity of water (e.g., a single serving - 200ml for tea) is the minimum amount needed to fully immerse the heating element 101 (or a heat-sink replacing element 101 in heat-conductive contact with the flat plate heating element 119).

The receptacle 103 includes one or more sensors 115 that detect one or more physical characteristics of the beverage 104, including for example weight, volume, and temperature. These can be located (partly or wholly) within both the beverage heating compartment 118 and the beverage holding compartment 121, and where the physical characteristic that they measure can be measured without direct physical contact with the beverage 104 (e.g., the weight) they may also be located within the sealed lower compartment 117 or the base unit 105.

The receptacle 103 may further include an impeller 123 configured to impel liquid to circulate or flow more quickly over the heating elements 101 and 119. This increases heat transfer from the elements to the surrounding liquid or beverage, and creates more even heating. The impeller 123 may be driven by a motor located within the receptacle 103, or may be linked by a detachable drive mechanism to a motor within the base unit 105. The motor of the impeller 123 may be controlled to operate only when the beverage maker 100 is set to operate in a fast-preparation mode, or may operate whenever the appliance 100 is activated. It may be powered similarly to the heating elements 101 and 119. Whilst the impeller 123 is shown as being arranged so as to drive liquid horizontally, it may be arranged instead to drive the liquid vertically upwards or downwards, or at another angle.

The base unit 105 contains a PCB 106 with integral processor, memory and data-transmission means to exchange data with any appropriate electrical elements in beverage maker 100. Where they are electronically controllable, the PCB 106 electronically communicates with the valves 112, 113, 114 to automatically control their opening and closing. The PCB 106 may also receive feedback from the sensors 115. The PCB may also control the power control system 111 to selectively power-on, power-down, or increase/decrease the power supply of the heating elements 101 and 119.

The base unit 105 also includes a power storage device 107 that stores electrical power. The power storage device 107 may be any known kind of storage device for electrical power, including one or more capacitors (e.g., so-called "super-capacitors") that is/are charged from mains power, and rechargeable electrochemical batteries of any known type, or a combination of the two. The PCB 106 controls both the charging of power storage device 107 from the mains, and its discharging (e.g., via power control system 111 and wires 120) into either (or both) of the heating elements 101 and 119 to carry out heating in them whilst they simultaneously receive power from the mains.

To aid in the appropriate conversion/transforming of electrical power, the power storage device 107 can include a transformer, converter, or such power-conversion means as are necessary to convert (AC to DC and/or DC to AC)/transform/rectify/step-up/step-down electrical power for carrying out charging of the power storage device 107 from mains power and discharging of electrical power stored by the power storage device 107 for powering of such elements in the beverage maker 100 as may derive electrical power from it, including the heating elements 101 and 119. Where the output of the energy store is DC (direct current) and is used to augment AC power provided externally to the beverage maker 100, a synchroniser is provided in the power storage device 107 to allow it to synchronise its output with the AC power to avoid destructive interference between the DC power and the AC power.

An example implementation of a synchroniser for augmenting AC power with DC power from the power storage device 107 includes a zero-cross-fired triac, silicon controlled rectifier, or thyristor, which discharges the energy store only when the AC voltage approaches zero or is positive or negative (depending on the polarity of the DC power). Thus the DC power is used to augment the AC power only when it is close to zero volts (where destructive interference is minimised) or matches the polarity of the DC power source. Indeed, where the power storage device 107 comprises multiple power stores (e.g., super-capacitors or electrochemical cells), some may be charged with a negative polarity and others with a positive polarity, and both positive and negative voltage DC power may be provided to augment the AC power. Positively-polarised power stores of the power storage device107 are selectively discharged to augment the AC power when the AC power is positive, and negatively-polarised power-stores would be selectively discharged when the AC is negative. Alternatively, the AC power itself may be rectified by a rectifier so as to be entirely positive or negative to match the polarity of the DC power of the power storage device 107. In a further alternative, a reversal relay may be used to reverse the polarity of the DC supply in response to the AC being of a different polarity to the DC supply.

The base unit 105 may also include a user interface 108 capable of receiving user input and outputting data to the user. This can be a touch-screen display, microphone/speaker using voice-control, gesture-control linked with a graphical display, control panel with suitable indicator lights and buttons, or other known user-interface device. The PCB 106 communicates electronically with the user interface 108 to receive user-input and output information to the user.

Use of DC power from power-store 107 to augment AC mains power is advantageous in that it means that fast preparation (e.g., fast-boiling) of a limited quantity of heated beverage (e.g., 200ml of water for making a cup of tea or coffee) may be performed with a single heating element 101 or 119. Conversely use of DC power from the power storage device 107 to exclusively power one of the heating elements 101 and 119, and AC mains power to exclusively power the other of the heating elements 101 and 119 is advantageous in that it avoids the need for circuitry such as the above-described synchroniser, whilst still achieving selective fast preparation (e.g., fast boiling) of a limited quantity of heated beverage by selectively activating the DC powered element to augment the heating of the AC-powered element. Fast preparation mode (e.g., fast boiling) may be initiated by the PCB 106 (or power control system 111) in response to either user input in user interface 108 (e.g., the selection of a 'fast boil' mode) and/or feedback from sensors 115 indicating that a limited quantity of beverage 104 (e.g., 200ml) is held in the receptacle 103.

In an alternative embodiment, both elements 101 and 119 may be selectively mains-powered. One or both of the heating elements 101 and 119 may be variable-resistance heating elements whose resistance can be automatically varied so as to generate more heat (and thus draw more mains power). In this case the beverage maker 100 may temporarily draw more than the 2-3kWs regarded as the long-term safe limit for a household mains supply circuit, either due to both heating elements being used, or the resistance of one (or both) of the heating elements being varied to draw more power. For example, 10-20% of additional power may be drawn. To avoid the burning out of fuses located either in the plug through which the mains power is received, or in the main circuit board (MCB) of the house in which the appliance is attached, either the PCB 106 or the power control system 111 will control the activation/resistance of the heating elements 101 and 119 so that the additional electrical power will only be drawn for a limited period such as is necessary to heat a limited beverage quantity (e.g., -30 seconds for a single serving of 200ml of water for making tea) and may apply a wait-time (e.g., -1 minute) before drawing power in excess of the 2-3kW limit again. For further security, the load may be divided between two power cables and/or plugs rather than one, with, for example, one plug powering the heating element 101 and the other powering the heating element 119.

The mains-powering of both elements 101 and 119 may be done in addition to the DC powering by power storage device 107 of one or both elements, or instead of it. For example, when the power storage device 107 is entirely discharged, the beverage maker 100 may be controlled automatically to instead draw more than the 2-3kW limit in the fashion described above.

The inflow valve 112, outflow valve 113, and exit valve 114 may be manually or automatically-controlled and actuatable valves of any known type. Preferably they are electronically controllable valves in electronic communication with a processor located either in power control system 111 or the PCB 106. They may be controlled based on either or both of feedback from the sensors 115 or user input provided to the user interface 108. In operation they co-operatively control the flow of beverage into and out of the beverage heating compartment 118 so that only a desired quantity of beverage is heated within the beverage heating compartment 118, thus preventing wasted energy and carrying out heating as quickly as possible. One or more or all of the valves may be omitted.

Whilst resistive heating elements have been described thus far, one or all of the heating elements may be replaced or augmented with heating elements of a different type. For example, the base 105 may house one or more inductive heating elements and the receptacle 103 may house one or more inductively heatable elements. At least one of the inductive heating elements of the base 105 may receive power from the power storage device 107 in addition to receiving mains power to boost its power in the fashion described above, or alternatively be solely powered by the power storage device 107 with other inductive heating elements being mains-powered.

The base unit 105 may be configured to receive, and deliver power to, more than one type of receptacle 103. For example, it may receive a kettle-type receptacle with a large capacity (e.g., 1.6 litres) and a cup-type (and shaped) "to-go" receptacle with a smaller capacity (e.g., 200-500ml, and preferably 200-300ml). The base unit 105 may include sensors for identifying the type of receptacle 103 that is attached to it (e.g., switches actuated by push-rods on the receptacles, or RFID sensors that detect RFID tags containing identifying data and receptacle characteristics attached to the receptacles).

Based on the receptacle-type detected by the base unit 105, the PCB 106 may carry out differing heating actions. For example, for a cup-type receptacle lacking internal resistive heating elements but including a inductively-heatable element, it may carry out inductive heating, whilst for a kettle-type receptacle having internal resistive-heating elements, it will instead (or additionally to inductive heating) power the resistive heating elements of the kettle-type receptacle. In another example, the base unit 105 may be set into a fast preparation (e.g., fast-boiling) mode in which the power storage device 107 is used to augment heating of water in the receptacle by the attachment of a receptacle having a limited capacity (e.g., a "to-go" cup-type receptacle of 300ml capacity). In this way a user may automatically have a single-serving of water boiled simply by attaching a cup filled with water to the base whilst, e.g., making their breakfast in a hurry in the morning.

Particularly (but not exclusively) where the receptacle 103 to be attached is of a small size that (being less securely held down by its weight) may tip over more easily, any powering connection between the base unit 105 and the receptacle 103 is ideally of a sealing variety that prevents ingress of water through the connection. For example the powering connection may have a spring-loaded removable, sealing cover that must be withdrawn against the bias of the spring (or other resilient element) to attach one to the other, and which covers the connection when the two elements are connected. The powering connection is also ideally of a 360 degrees-type that allows attachment of the receptacle 103 to the base unit 105 at any desirable angle. Alternatively the connection of one of the base unit 105 or the receptacle 103 may be surrounded by a skirt that sealingly fits into an indent in the other of the base unit 105 or the receptacle 103, thus sealing the connection.

Tea, coffee, or other soluble material for making a beverage, may be located within box a 124, which has holes defined in it for allowing heated water to enter the box 124, extract or infuse material from the tea leaves or coffee grounds located within it, and exit into the liquid contained in the rest of the kettle. The box 124 may be a capsule or capsule holder into which capsules containing coffee, tea, or other soluble substances for preparing a beverage may be placed.

Whilst the box 124 is shown inside the beverage holding compartment 121, it may be located anywhere within the kettle where it may be exposed to heated liquid. For example, it may be located in the beverage heating space 118 proximate to the impeller 123 so that water flow generated by the impeller 123 is directed to flow over the material contained within the box 124 during operation. Alternatively it may be arranged in the outflow channel 122 so that liquid exiting the receptacle 103 is exposed to the material contained within box 124 prior to exiting the receptacle 103, and thus the furring of dissolved coffee/tea/etc. on the heating elements is avoided.

Where a cup-type (and shaped) "to-go" receptacle 103 is provided for use with the base unit 105, it is preferably provided with insulation, for example by having a double-walled construction (or triple, or further walls as appropriate), and more preferably it has a vacuum formed between the walls, to reduce heat emissions from within the receptacle 103. Where this "to-go" type receptacle 103 has a heating element 101, 119 that can be powered using DC current within it, the "to-go" receptacle may include a DC power store such as a rechargeable electrochemical battery or a super-capacitor which can be controlled by a processor within the receptacle to power the heating element in response to feedback from, for example, a temperature sensor to maintain a desired temperature.

When the receptacle 103 is attached to the base unit 105, the base unit 105 may provide power to recharge the power store of the receptacle 103 with DC current, preferably doing so responsive to a sensed charging-level (i.e., power content relative to maximum power content) of the power store. The power store in the receptacle 103 may also perform all the functions of the power store 107 in the base unit 105 when the receptacle is attached to the base 105. The DC heating element 101, 119 may also be arranged to receive power from an external DC power source such as, for example, a car's cigarette lighter socket or USB socket, via a dedicated cable and adaptor, either directly or as a result of the power store of the receptacle 103 being arranged to be re-chargable from this source.

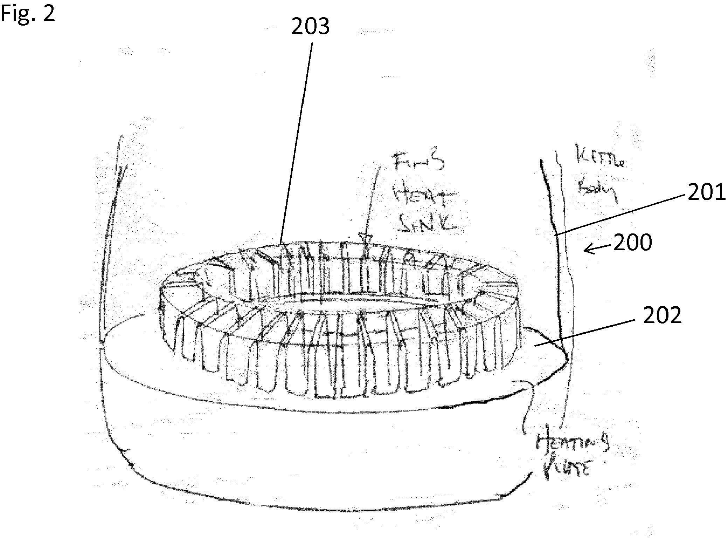

Fig. 2 shows a kettle 200 comprising a kettle body 201 within which a heating plate 202 is located on (or forming integrally) a lower interior surface. A wave-shaped finned heat sink 203 contacts the heating plate 202 for improving heat transference from the heating plate 202 (which may contain or itself be an electrical heating element or elements) to a liquid contained within the kettle body 201.

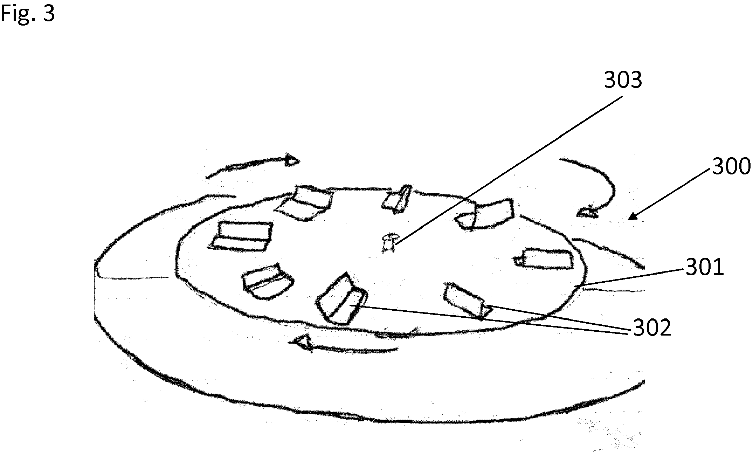

As shown in Fig. 3, a circulation pump arrangement 300 may increase circulation within a kettle by driving the liquid inside a kettle to circulate, thus increasing movement of water (or another liquid) over any heating elements contained within the kettle to improve heat transference.

This is achieved by the plate 301 having fins 302 which extend into the liquid when immersed in it being driven to rotate about a central axle 303 by, e.g., an electric motor (not shown) that may be located within the kettle body or in a base unit which is removably attachable to the central axle 303. This motor may be activated by the base unit depending on whether the user has selected a fast-boil mode, or by other methods already discussed. Alternatively the fins 302 may be angled such that a vertical force applied to them by, e.g., heated water rising from below, acts to drive the plate to rotate.

The plate 301 may itself be a heating element, or may be connected to a heating element so as to improve heat transference from it by conducting heat away from it. Plate 301 may also have holes defined therethrough so as to prevent heated water becoming trapped beneath it and allow heated water to rise through it to push against the fins 302.
Each feature disclosed in the description, and (where appropriate) the claims and drawings may be provided independently or in any appropriate combination.

Reference numerals appearing in the claims are by way of illustration only and shall have no limiting effect on the scope of the claims.

## Claims

1. An appliance for heating a liquid, comprising:
a liquid receptacle having a first compartment with an inlet for receiving liquid to be heated, and a second compartment in fluid communication with the first compartment so as to receive liquid from the first compartment, the second compartment having an outlet for dispensing heated liquid; and
at least one heater operable to heat liquid contained in the second compartment,
and preferably comprising a valve arranged to control the flow of liquid between the first and second compartments.

2. The appliance of Claim 1, wherein the second chamber is smaller than the first chamber, preferably wherein the second chamber has a volume of less than 500 ml; optionally less than 400ml; optionally less than 300 ml, optionally wherein the second chamber is arranged to contain a fixed volume of fluid from the first chamber, and/or wherein the second chamber is arranged to fill with liquid when liquid is added to the receptacle, optionally by being below the first chamber.

3. The appliance of any preceding claim, further comprising an outlet valve arranged to control the flow of fluid out of the second compartment, preferably in which the outlet of the second chamber comprises an outlet channel having a dispensing spout, and preferably wherein the channel is arranged adjacent the first chamber, and the dispensing spout is arranged at an upper portion of the receptacle and/or wherein the spout comprises a dispensing valve optionally having a fastener arranged on the outside of the receptacle which is operable to close the dispensing valve, and/or wherein the receptacle comprises a removable cover arranged to close the inlet of the first compartment; and optionally arranged to provide a fluid tight seal.

4. The appliance of any preceding claim, wherein the first compartment comprises insulation so as to inhibit cooling of a heated liquid contained therein, and/or wherein the at least one heater comprises at least one heat plate arranged to heat the fluid in the second chamber, optionally wherein the heat plate is arranged between the first and second chambers so as to provide heat to fluid contained in at least one of the first and second chambers, and/or wherein the at least one heater comprises an immersion heater arranged to be immersed in the fluid whereby to heat the fluid, and/or wherein the at least one heater comprises at least one heat sink disposed within the second chamber, and/or comprising at least two heaters, wherein the heaters are individually controllable.

5. The appliance of any preceding claim, further comprising a controller arranged to control the provision of electrical power to the at least one heater and/or to control the operation of the inlet and outlet valves, preferably further comprising at least one sensor arranged to detect at least one physical parameter of a fluid contained in at least one of the first and second compartments, optionally wherein the parameter is at least one of fluid weight, volume and/or temperature, and preferably wherein the controller is arranged to operate in response to an output of the sensor.

6. The appliance of any preceding claim, further comprising an impeller arranged to impel flow in fluid contained within the second chamber, optionally wherein a motor arrangement for driving the impeller is arranged within the receptacle, and/or comprising a moveable stirring member arranged in the second compartment, optionally wherein the stirring member is arranged to be operated by upward motion of heated liquid in the compartment.

7. The appliance of any preceding claim, further comprising a base unit to which the fluid receptacle is removably mountable via a connection mechanism, the base unit having a connection to an external power supply, for example a mains (AC) power supply, and the connection mechanism being arranged to transmit power to the receptacle, and optionally to allow 360 degree attachment, and/or data-transfer.

8. The appliance of any preceding claim, further comprising a processor and/or a memory and/or data-transfer means in at least one of the controller or base unit, optionally connected to a PCB, optionally which has an integral processor, and/or wherein the base unit includes a power storage device having at least one capacitor for storing electrical power, and arranged to selectively supply power to the at least one heater.

9. An appliance for heating fluid, comprising a base unit arranged to receive a fluid receptacle having at least one heater for heating fluid contained therein, the base unit comprising a power storage device for storing electrical power and arranged to selectively supply electrical power to at least one heater of the fluid receptacle.

10. The appliance of Claim 9, where the power storage device includes a rechargeable battery, and/or wherein the power storage device further comprises power-conversion componentry configured to perform at least one of: AC/DC conversion; DC/AC conversion so as to transform electrical power for charging and/or discharging the battery, and preferably wherein the base is arranged to supply power to at least one heater of the fluid receptacle from an external power source, optionally a mains power supply.

11. The appliance of Claim 10, further comprising a synchroniser associated with the power storage device, the synchroniser being arranged to synchronise a DC output of the power storage device with AC power, provided externally to the receptacle so as selectively to augment the AC power with DC power stored in the power storage device, and/or wherein the receptacle comprises at least two heaters, one of which is arranged to be powered by DC power from the power storage device, and the other of which is arranged to be powered by external AC power.

12. The appliance of any of claims 9 to 11, in which the base is configured to mount a plurality of different receptacles, optionally in which the receptacles have different volumes, and comprises a sensor arranged to provide an indication of a property of a receptacle mounted thereto, optionally wherein the property is the volume of the receptacle and/or
in which the property is a property relating to a heater in the receptacle, and preferably in which the base is arranged to supply power from the power connection and/or from the power storage device in dependence upon the property of the receptacle mounted thereto, the appliance optionally comprising a seal for sealing the connection arrangement when a receptacle is not mounted on the base.

13. A base unit for heating fluid in a receptacle, the unit having a mount for a receptacle and comprising a sensor arranged to provide an indication of a property of a receptacle mounted thereto, a power supply arrangement for providing power for heating fluid in the receptacle, and a processor configured to control the power supply arrangement depending upon the indication received from the sensor.

14. An appliance comprising a base unit as claimed in claim 13 and at least one receptacle configured to be mountable on the base unit for heating fluid in the receptacle, preferably in which the at least one receptacle has a double walled construction for insulating against heat loss from the fluid therein, and optionally in which the at least one receptacle has a DC power store and a heating element for heating fluid within the receptacle powerable by the DC power store, where the DC power store is arranged to be rechargable by the power supply arrangement of the base when the receptacle is mounted on the base.

15. An appliance as claimed in any one of claims 9 to 14 comprising a plurality of receptacles having different properties.

16. A method of heating a liquid, comprising:
storing a liquid in a first compartment of a fluid receptacle;
transferring a portion of the liquid from the first compartment to a second compartment of the fluid receptacle; and
heating the portion of fluid contained in the second compartment;
wherein the second compartment has a closable fluid connection with the first compartment so as to receive liquid from the first compartment.
